# EUROPEAN PATENT SPECIFICATION

(11) **EP 1 431 122 B1**
(45) Date of publication and mention of the grant of the patent: **30.08.2006**
(21) Application number: 04007002.1
(22) Date of filing: 29.06.2001
(51) Int. Cl.: B60R 7/02

(54) **Collapsible storage apparatus for vehicle cargo compartments**
Zusammenklappbarer Behälter für den Kraftfahrzeugladeraum
Appareil de stockage repliable pour compartiment à bagages de véhicules

(30) Priority: 29.06.2000 US 214947 P
(43) Date of publication of application: 23.06.2004
(62) Divisional of application: 01950756.5
(73) Proprietor: Collins & Aikman Plastics, Inc., Troy, MI 48098 (US)
(72) Inventor: Gehring, Thomas F. J., Scarborough, Ontario M1T 2J9 (CA); Havidic, Dejan, Toronto Ontario M4P 1Y5 (CA); Flaman, Brian, Toronto, Ontario M5T 1B3 (CA); Jankowski, Eric, Richmond Hill, Ontario L4S 1T1 (CA)
(74) Representative: Boakes, Jason Carrington

(56) References cited:
- US-A- 3 199 759
- US-A- 3 404 818
- US-A- 3 986 656
- US-A- 5 190 212
- US-A- 5 230 690
- US-A- 5 379 906
- US-A- 5 518 170
- US-A- 5 772 058

## Description

The present invention relates generally to vehicles and, more particularly, to cargo management apparatus for use within vehicles.

Motor vehicles are typically.provided with a cargo storage compartment of some type. For example, sedan-style automobiles are conventionally equipped with a trunk. Sport/utility and mini-van vehicles, in which there are two or more rows of seating, are conventionally provided with a cargo storage area behind the last row of seating.

Items carried within vehicle cargo storage areas are often free to move about during vehicle operation, which may be undesirable. Cargo netting may be used to restrain items from movement within vehicle cargo storage compartments. While such netting may adequately restrain items from movement, cargo netting may require the use of two hands to hold the cargo netting back while placing items therewithin, which may be cumbersome.

Various devices are known for dividing vehicle storage compartments to prevent movement of items stored therein. For example, U.S. Patent No. 6,027,155 to Wisniewski et al. describes a storage system for a vehicle cargo compartment that includes a cover that is removably attached to the floor of the cargo compartment and that is configured to.rotate between open and closed ' positions. U.S. Patent No. 5,669,537 to Saleem et al. describes a storage unit that extends between, and connects to, vehicle panels of a vehicle storage area. U.S. Patent No. 5,501,384 to Wisniewski describes a storage system for a vehicle that includes a molded bin and a cover pivotally secured to the bin. '

Unfortunately, these devices are somewhat complex and bulky and are not adapted to be compactly stored within the cargo storage area of a vehicle. Moreover, in automotive vehicles such as sport/utility vehicles and mini-vans, cargo storage space maybe somewhat limited. Accordingly, a need exists for a cargo storage device that can securely retain items within a cargo storage area during operation of a vehicle and that can be easily stored in an out-of-the-way location when not needed, and without requiring that the storage device be removed from the cargo storage area. In addition, a need exists to maximize the efficiency and utilization of existing cargo storage space without intruding on passenger space.

It is an aim of embodiments of the present invention to at least partly mitigate the above-mentioned problems.

According to a first aspect of the present invention there is provided a portable storage apparatus configured to be removably disposed on the compartment floor of a vehicle, characterised by:
a central wall (1030) having opposite first and second sides and having first and second end regions;
first, second and third walls each having a length substantially half of a length of said central wall, movable with respect to the central wall between respective stored and operative positions, wherein respective ends of the first and third walls are pivotally attached to the central wall and extends outwardly substantially perpendicular from said first end region and central region of the central wall first side when the first, second and third walls are in an operative position, the second wall being pivotally attached to remaining ends of the first and third walls at respective ends thereof to define a first storage compartment (1035) for receiving items therein, and wherein the first, second and third walls overlie the central wall first side in a folded, face-to-face configuration when in a stored position;
fourth, fifth and sixth walls each having a length substantially half of a length of said central wall, movable with respect to the central wall between respective stored and operative positions, wherein respective ends of the fourth and sixth walls are pivotally attached to the central wall and extends outwardly substantially perpendicular from said second end region and central region of the central wall second side when the fourth, fifth and sixth walls are in an operative position, the second wall being pivotally attached to remaining ends of the first and third walls at respective ends thereof to define a second storage compartment (1035) for receiving items therein, and wherein the fourth, fifth and sixth walls overlie the central wall second side in a folded, face-to-face configuration when in a stored position;
a central handle extending from an upper edge portion of the central region of the central wall and by which a user can carry the portable storage apparatus;
a first handle portion extending from an upper edge portion of the second wall;
a second handle portion extending from an upper edge portion of the fifth wall, wherein the first handle portion is in adjacent, face-to-face alignment with the central handle when the first, second and third walls are in the stored position, and the second handle portion is in adjacent, face-to-face alignment with the central handle when the fourth, fifth and sixth walls are in the stored position; and
first and second posts extending downwardly at locations where said first and second walls and said fourth and fifth walls are attached respectively.

Moreover, storage devices according-to embodiments of the present invention can be quickly folded into a flat position such that the storage device is out .of the way when not in use and/or when larger devices need to be stored within the cargo storage area.

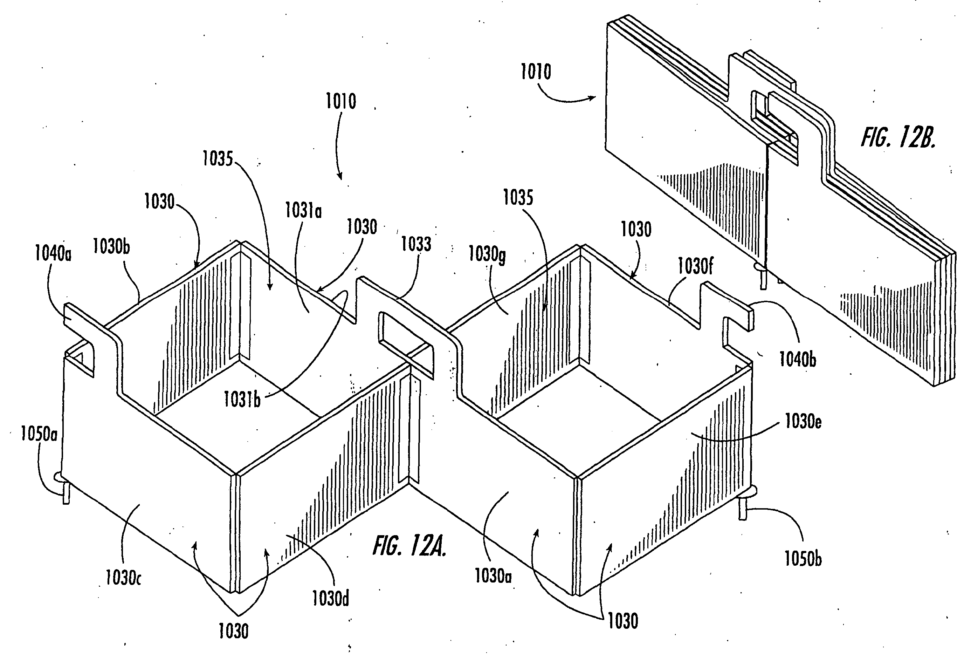

The invention is disclosed in Figures 12A and 12B. The other Figures provide alternative apparatuses.
**Fig. 1** is a perspective view of a collapsible storage apparatus for storing items within a vehicle compartment;
**Fig. 2** is a perspective view of a collapsible storage apparatus for storing items within a vehicle compartment;
**Fig. 3** is a perspective view of a collapsible storage apparatus for storing items within a vehicle compartment :
**Fig. 4** is a perspective view of a collapsible storage apparatus for storing items within a vehicle compartment;
**Figs. 5A-5B** are perspective views of a collapsible storage apparatus for storing items within a vehicle compartment, wherein **Fig. 5A** illustrates the apparatus in a closed position and **Fig. 5B** illustrates the apparatus in an open position;
**Figs. 6A-6B** are side views of the apparatus of **Figs. 5A-5B** illustrating a locking member configured to releasably secure the movable panel in an open position, wherein **Fig. 6A** illustrates the locking member in a locked position so as to prevent movement of the panel towards the base, and wherein **Fig. 6B** illustrates a force being applied to the second ends of the first and second arms to cause the locking member to allow the panel to move towards the base to a closed position;
**Figs. 7A-7B** are perspective views of a collapsible storage apparatus for storing items, within a vehicle compartment, wherein **Fig. 7A** illustrates the apparatus in a closed position and **Fig. 7B** illustrates the apparatus in an open position;
**Figs. 8A-8B** are perspective views of a collapsible storage apparatus for storing items within a vehicle compartment, wherein **Fig. 8A** illustrates the apparatus in a closed position and **Fig. 8B** illustrates the apparatus in an open position;
**Fig. 9** is a perspective view of a collapsible storage apparatus for storing items within a vehicle compartment;
**Fig. 10A** is a perspective view of a collapsible storage apparatus for storing items within a vehicle compartment;
**Fig. 10B** is a side view of the collapsible storage apparatus of **Fig. 10A.**
**Fig. 11A** is a perspective view of a collapsible storage apparatus for storing items within a vehicle compartment;
**Fig. 11B** is a side view of the collapsible storage apparatus of **Fig. 11A;** and
**Figs. 12A-12B, 13A-13B, 14A-14B**, and **15** illustrate collapsible storage apparatus.

In the drawings, the thickness of lines, layers and regions may be exaggerated for clarity. It will be understood that when an element such as a layer, region, eubstrate, or panel is referred to as being "on" another element, it can be directly on the other element or intervening elements may also be present. In contrast, when an element is referred to as being "directly on" another element; there are no intervening elements present. It will be understood that when an element is referred to as being "connected" or "attached" to another element, it can be directly connected or attached to the other element or intervening elements may also be present. In contrast, when an element is referred to as being "directly connected" or "directly attached" to another element, there are no intervening elements present. The terms "upwardly", "downwardly", "vertical", "horizontal" and the like are used herein for the purpose of explanation only.

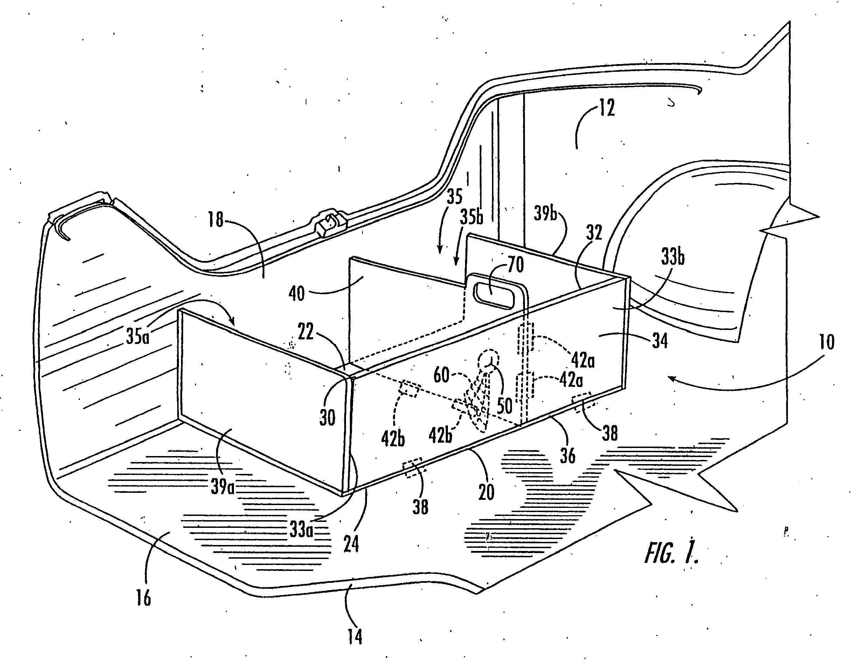

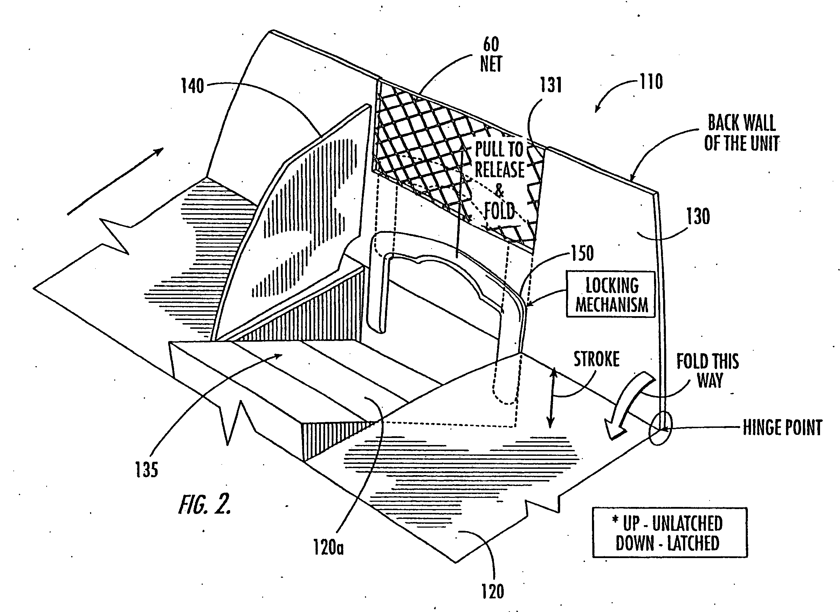

Referring to **Fig. 1,** a collapsible storage apparatus 10 for storing items within a vehicle compartment **12.** The illustrated vehicle compartment **12** is a trunk of an automobile. However, it is understood that embodiments of the present invention may be utilized in various compartments of various vehicles, such as the rear storage area of a mini-van, truck, and/or sport utility vehicle, without limitation. The illustrated vehicle compartment **12** includes a load floor (hereinafter "floor") **14** having a floor covering (*e.g.,* carpet, mat, etc.) **16** and at least one side wall **18** extending substantially vertically from the floor **14.** The illustrated vehicle compartment **12** is partially defined by the floor **14** and the side wall **18.** Other walls, seat back, and package tray (not shown) may further define the vehicle compartment **12.**

The illustrated apparatus **10** includes a base **20** disposed on or at least partially below the floor **14** and having a surface **22** that is at least partially exposed to the vehicle compartment **12** when the apparatus **10** is in an' operative (*i.e*., open) position. The base **20** may be disposed at or below the floor covering **16.** The illustrated base **20** has a generally rectangular shape, occupies substantially less than the entire floor covering **16,** and is disposed adjacent the side wall **18**. However, the base **20** may have any size and shape, such as circular, oval, or square, and can be positioned anywhere within the vehicle compartment **12.** When the base **20** is disposed below the floor covering **16,** the floor covering **16** includes an opening **24** such that at least a portion of the surface **22** is exposed to the vehicle compartment **12** when the apparatus **10** is in an operative (*i.e.*, open) position.

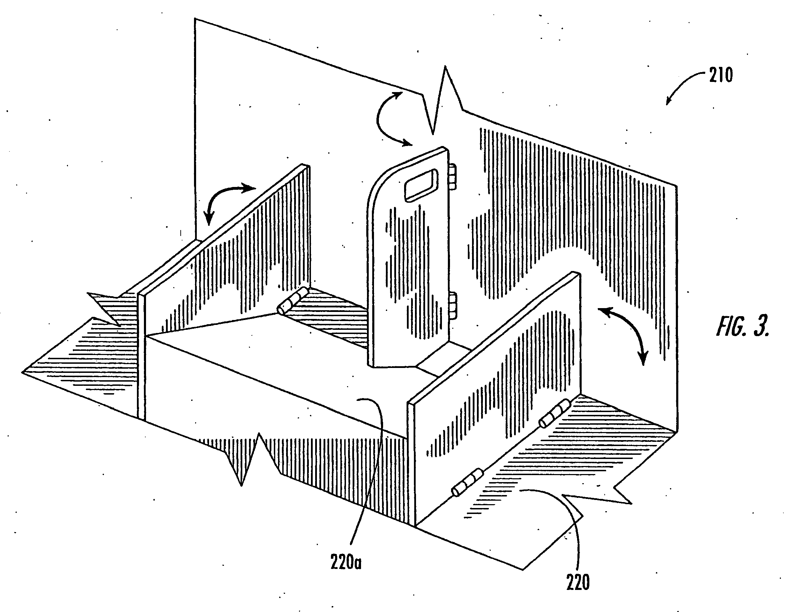

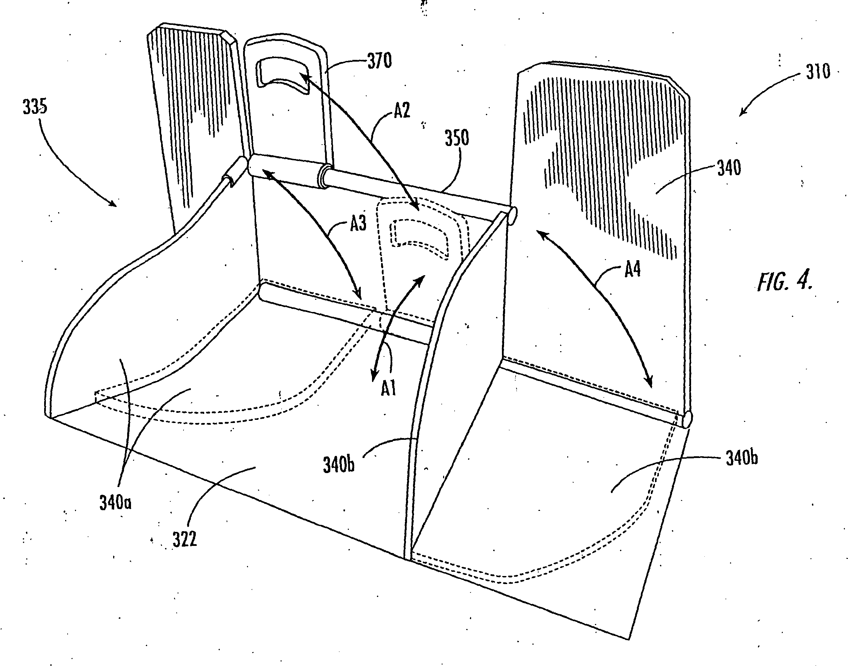

The base **20** may have a generally flat configuration and/or may have one or more portions thereof that have a sloped orientation relative to horizontal. For certain installations, the base **20** may conform to the configuration of the sheet metal in the vehicle compartment. **Figs. 2 and 3** illustrate storage apparatus **110, 210** wherein the bases **120, 220** include portions **120a, 220a** having sloped configurations.

A floor covering within a compartment may serve the function of a "base." As such, a rear panel may be pivotally attached to the floor covering. Accordingly, it is to be understood that base **20** may be a separate element or may be a floor covering or may be the floor itself.

Referring back to **Fig. 1,** the illustrated apparatus **10** includes a rear panel **30** pivotally attached to the base **20** via one or more hinges **38** and having opposite front and rear sides **32, 34** and opposite first and second end portions **33a, 33b.** The rear panel **30** is movable between a closed position wherein the front side **32** is in overlying, face-to-face relation with the base surface **22** and an open position wherein the rear panel **30** is disposed substantially normal to the base surface **22.** In the open position, the rear panel **30** and base surface **22** (along with the end panels **39a**; **39b** described below) define a storage compartment **35** for receiving items therein.

The base **20** may be disposed at least partially beneath the floor **14** such that the rear panel **30** is substantially flush with the floor **14** when the rear panel **30** is in the closed position. The base **20** may be disposed on the floor covering **16** such that the rear panel **30** rests on top of the floor covering **16** when in the closed position.

A hinge of virtually any type may be utilized to pivotally attach the rear panel **30** to the base **20** (or to the floor **14** or other vehicle component adjacent to the base **20**). The floor covering **16** (*e.g*., *carpeting*) may be disposed on the floor **14** and on the rear side **34** of the rear panel **30** and may serve as a hinge. The base **20** may be disposed sufficiently beneath the floor **14** such that the rear panel **30** and floor covering **16** disposed thereon is substantially flush with the floor **14** when the rear panel **30** is in the closed position. Accordingly, the apparatus **10** may appear integral with a vehicle compartment floor **14** when the rear panel **30** is in the closed position.

However, it is to be understood that the embodiments need not be flush with a vehicle compartment floor or floor covering. Moreover, the embodiments may be configured to lie directly on top of a floor or floor covering.

Still referring to the apparatus illustrated in **Fig. 1,** first and second end panels **39a, 39b** are movably attached to the first and second end portions **33a, 33b** of the rear panel **30.** The first and second end panels **39a, 39b** are movable between a stored position in face-to-face relation with the rear panel front side **32** and an operative position disposed substantially normal to the base surface **22** and to the rear panel **30.** The first and second end panels **39a, 39b** move from their respective stored positions to operative positions in response to movement of the rear panel **30** from its closed position to its open position. The first and second end panels **39a, 39b** together with the base surface **22** and rear panel **30** define a storage compartment **35** for receiving items therein.

The first and second end panels **39a, 39b** may be pivotally attached to the base surface **22** and are movable between a stored position in face-to-face relation with the base surface **22** and an operative position disposed substantially normal to the base surface **22** and to the rear panel **30.** Even if attached directly to the base surface **22** (or adjacent thereto), the first and second end panels **39a, 39b** move from their respective stored positions to operative positions in response to movement of the rear panel **30** from its closed position to its open position.

Still referring to **Fig. 1,** the illustrated apparatus **10** also includes a partition panel **40** that is movably attached to the front side **32** of the rear panel **30.** The partition panel **40** is movable between a stored position in face-to-face relation with the rear panel front side **32** and an operative position disposed substantially normal to the base surface **22** and to the rear panel **30.** The partition panel **40** may move from its closed position to its open position in response to movement of the rear panel **30** from its closed position to its open position. Alternatively, movement of the partition panel **40** may be independent of movement of the rear panel **30,** The partition panel **40** divides the compartment **35** into multiple sections **35a, 35b** when in the operative position.

In the illustrated apparatus, the partition panel **40** is generally parallel with the first and second end panels **39a, 39b** when the apparatus **10** is in an open position. Although only a single partition panel **40** is illustrated, it is understood that multiple partition panels may be utilized.

The partition panel **40** may be movably attached to the front side **32** of the rear panel **30** via one or more hinges **42a.** Alternatively, the partition panel **40** may be movably attached to the base surface **22** via one or more hinges **42b.** A hinge of virtually any type may be utilized to movably attach the partition panel **40** to either the rear panel front side **32** or to the base surface **22**. Embodiments of the present invention are not limited to a particular type of hinge.

Still referring to **Fig. 1,** a handle **70** is attached to the partition panel **40** and is configured to be grasped by a user and used to move the rear panel **30** from the-closed position to the open position, thereby causing the end panels **39a, 39b** to move to-their respective operative positions to form a compartment **35** for receiving items therein. The handle **70** may then be used to move the partition panel **40** to its operative position to form compartments **35a, 35b.** The handle **70** may be attached to the rear panel **30.** Handles having various shapes and configurations may be utilized in accordance with embodiments of the present invention. Moreover, handles may be located on the partition panel **40** and/or on the rear panel **30** in various locations. It is to be understood that embodiments of the present invention do not require a handle (*i.e*., handles are optional).

One or more projections **50** (*e.g*., hooks) may be provided and may extend from the rear panel front side **32** as illustrated in **Fig. 1.** Each such projection **50** is configured to support articles suspended therefrom, such as loaded grocery bags, and the like.

Cargo netting **60** configured to enclose the compartment **35** and/or compartments **35a, 35b,** and items stored therewithin, may be attached to the rear panel **30** as illustrated in **Fig. 1.**

In operation, when it is desired to load and transport items in the vehicle compartment **12** of a vehicle having the collapsible apparatus **10** of **Fig. 1** installed therein, the apparatus **10** is moved from the stored position and snapped into the open position with one easy motion of the handle **70.** The rear panel **40,** end walls **39a, 39b,** and partition panel **40** are configured to snap into a locked orientation such that they remain firmly in place until it is desired to close the apparatus **10**.

Movement of the partition panel **40** from a stored position to an operative position may cause the rear panel **30** to move from the closed position to the open position which, in turn, causes the first and second end panels **39a, 39b** to move from the respective stored positions to the respective operative positions. Alternatively, movement of the rear panel **30** from a stored position to an operative position may cause the first and second end panels **39a, 39b** to move from the respective stored positions to the respective operative positions. Operation of the partition panel **40** may be independent of movement of the rear panel **30.**

When the apparatus **10** is no longer desired for use in storing items therein, the above procedures can be reversed. For example, any additional partition panels may be pivoted such that they are disposed against either the base surface **22** or the rear panel front side **32**, and then the rear panel **30** can be moved to a closed position, thereby causing the end panels **39a, 39b** to move to their closed positions. Accordingly, apparatus can be moved quickly and easily from stored, closed positions to open, operative positions.

Referring to **Fig. 2,** a collapsible storage apparatus **110** for storing items within a vehicle compartment, is illustrated. The illustrated apparatus **110** includes a base **120** having a portion **120a** that has a sloped configuration. A rear panel **130** is movably attached to the base **120** and includes an opening **131** formed in a portion thereof, as illustrated. Cargo netting **60** extends across the rear panel opening **131** and allows a user to place items within the compartment **135** formed by the rear panel **130** and base sloped portion **120a**. A partition panel **140** is also provided that is movably secured either to the rear panel **130** or to the base **120.** As described above, the partition panel **140** is movable between a stored position and an operative position.

A locking member **150** is also provided that is configured to maintain the rear panel **130** of the apparatus **110** in the open position. The illustrated locking member **150** is configured to move upwardly and downwardly relative to the base **120.** When the rear panel **130** is moved to the open position, the locking member **150** is moved downwardly to maintain the rear panel **130** in.the open position. To lower tiie rear panel **130** to the closed position, the locking member **150** is moved upwardly, which then allows the rear panel 130 to pivot. Various types of locking member having various configurations may be utilized.

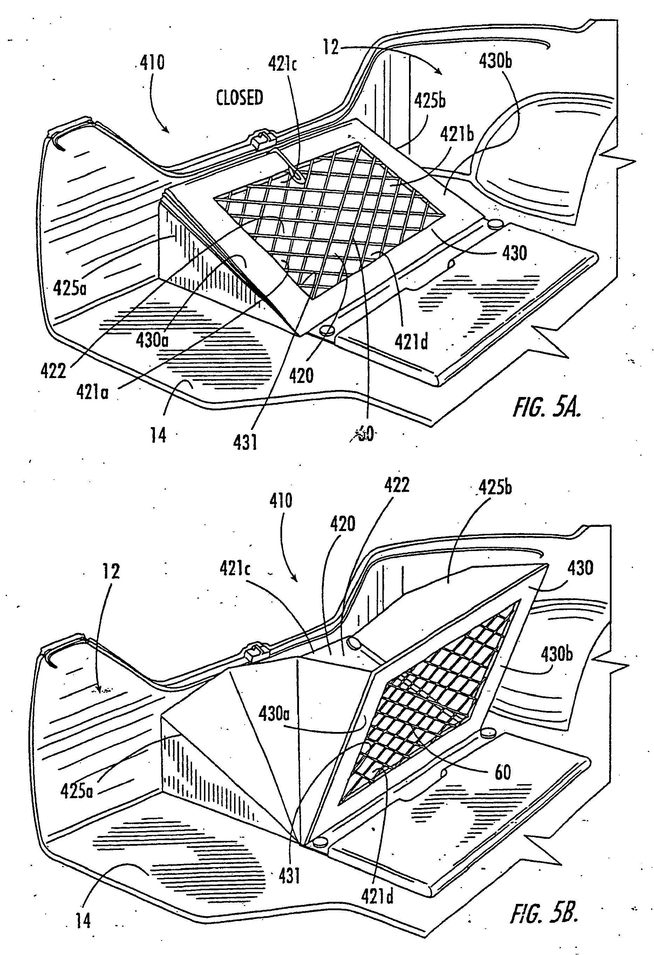

Referring to **Fig. 4,** a collapsible storage apparatus **310** for storing items within a vehicle compartment, is illustrated. The illustrated apparatus **310** includes a pair of partition panels **340a, 340b** movably attached to a base surface **322** (or adjacent thereto) in adjacent, spaced-apart relationship. Each partition panel **340a, 340b** is movable between a stored position in face-to-face relation with the base surface **322** and an operative position disposed substantially normal to the base surface **322** and to the rear panel **340** so as to divide the compartment **335** into multiple sections. A handle **370** is rotatably connected to the pair of partition panels **340a, 340b** via member **350.** The handle **370** is configured to be grasped by a user and to move the partition panels **340a, 340b** from the stored positions to the operative positions.

To move the partition panels **340a, 340b** from a stored position to an operative position, a user grasps the handle **370** which is lying in face-to-face relation with the base surface **322,** rotates the handle **370** as indicated by arrow **A1** and pulls upwardly as indicated by arrow **A2.** The partition panels **340a**, **340b** follow the movement indicated by arrow **A2** and move to an operative position as indicated by arrows **A3** and **A4,** respectively.

When not needed, the partition panels **34aa, 340b** can be returned to a stored position by reversing the above operations. The partition panels **340a, 340b** and handle **370** may be maintained in a flush-mounted handle **370** may be maintained in a flush-mounted configuration within the base **322** when stored. However, it is not required that the partition panels **340a, 340b** and handle **370** are maintained in a flush-mounted configuration within the base **322** when stored.

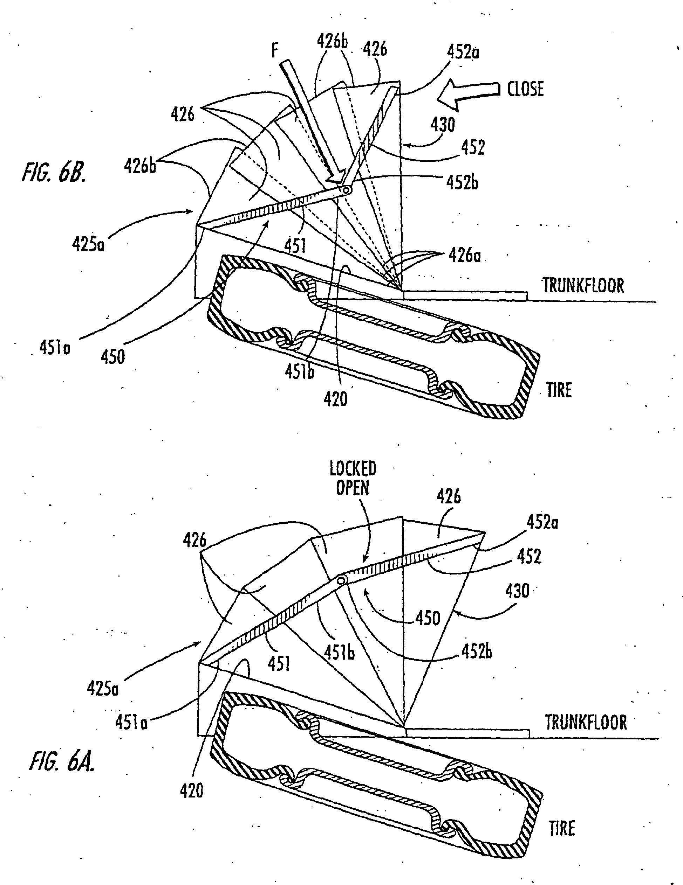

Referring now to **Figs. 5A-5B,** a collapsible storage apparatus **410** for storing items within a vehicle compartment **12,** is illustrated. The apparatus **410** includes a base **420** disposed on the floor **14** of a vehicle compartment **12.** The base **420** includes opposite first and second end portions **421a, 421b,** opposite first and second edge portions **421c, 421d,** and a surface **422** exposed to the vehicle compartment **12.** First and second expandable walls **425a, 425b** extend from the base surface adjacent the respective first and second end portions **421a, 421b** and are attached to a panel **430.**

The panel **430** is pivotally attached to the base **420** and includes opposite first and second end portions **430a, 430b.** The panel first and second end portions **430a, 430b** are connected to the respective first and second expandable walls **425a, 425b.** The illustrated panel **430** includes an aperture **431** formed therethrough with cargo netting **60** overlying the aperture **431.**

The panel **430** is movable between a closed position in overlying, face-to-face relation with the base surface **422 (Fig. 5A)** and an open position disposed substantially transverse to the base surface **422 (Fig. 5B**). The base **422,** first and second, expandable walls **425a, 425b,** and panel **430** define one or more storage compartments for receiving items therein.

The illustrated expandable walls **425a, 425b** each include a plurality of members **426** pinned together at a first end **426a** and having opposite free ends **426b.** The members **426** of each expandable wall **425a, 425b are** configured to move from a stacked relationship. **(Fig. 5A)** to a fanned relationship **(Fig. 5B)** when the panel **430** is moved from a closed position **(Fig. 5A)** to an open position **(Fig. 5B).**

Expandable and collapsible walls of various types and Configurations may be utilized (*e.g.,* telescoping walls; walls having accordion-type bellows ; etc.).

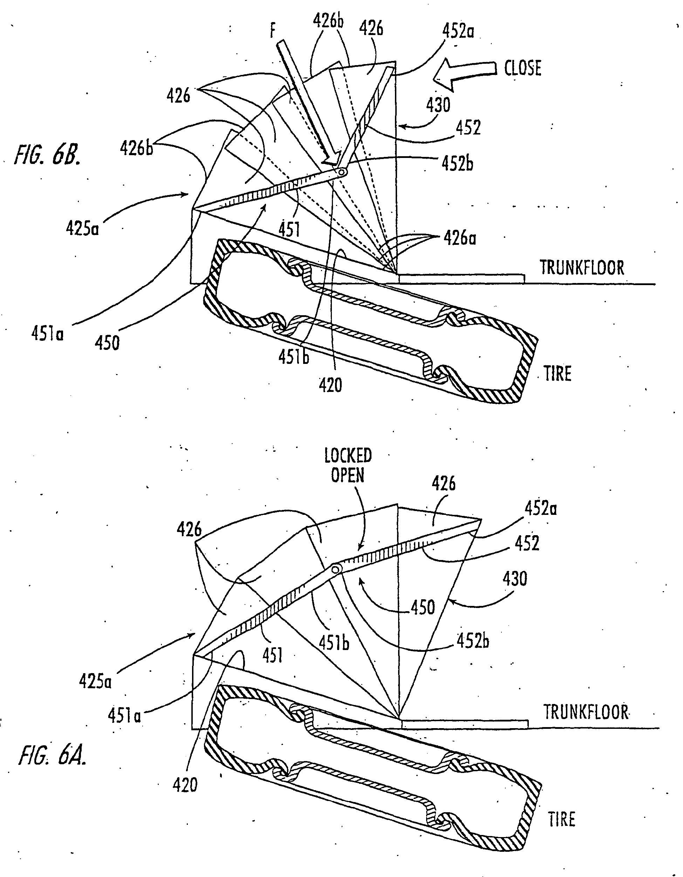

As illustrated in **Figs. 6A-6B,** a locking member **450** is provided to releasably secure the panel **430** in an open position. A locking member **450** may be provided for each expandable wall **425a, 425b,** or for just one expandable wall (*i.e*., **425a** or **425b).** The illustrated locking member **450** includes first and second elongated arms **451, 452,** each having opposite first and second ends **451a, 451b, 452a, 452b.** The first arm first end **451a** is pivotally attached to the base **420,** or adjacent thereto. The second arm first end **452a** is pivotally attached to the panel **430.** The second ends **451b, 452b** of the first and second arms **451, 452** are pivotally attached together.

To lock the panel **430** in an open position, the second ends **451b, 452b** of first and second arms **451, 452** are pulled upwardly such that the configuration of the locking member **450** prevents movement of the panel 430 towards the base **420 (Fig. 6A.).** To unlock the panel **430** from an open position and permit the panel **430 to** move to a closed position, a downwardly force **F** is applied to the second ends **451b**, **452b of first** and second arms **451, 452**, as illustrated in **Fig. 6B. The** members **426** of each expandable wall **425a, 425b** can then move from a fanned relationship to a stacked relationship as the panel **430** is moved to a closed position.

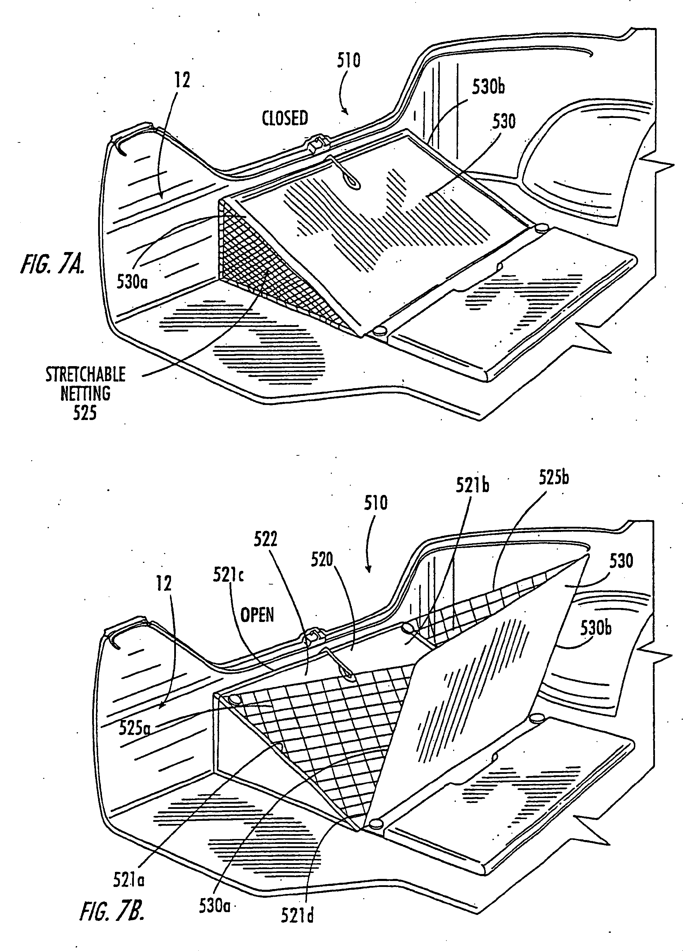

Referring now to **Figs. 7A-7B,** a collapsible storage apparatus **510** for storing items within a vehicle compartment, is illustrated. The apparatus **510** includes a base **520** disposed on the floor **14** of a vehicle compartment **12.** The base **520** includes opposite first and second end portions **521a, 521b,** opposite first and second edge portions **521c, 521d,** and a surface **522** exposed to the vehicle compartment **12.** Elastic cargo netting **525a, 525b** extends from the base surface **522** adjacent the respective first and second end portions **521a, 521b** and is attached to a panel **530.**

The panel **530** is pivotally attached to the base **520** and includes opposite first and second end portions **530a, 530b.** The panel first and second end portions **530a, 530b** are connected to the elastic cargo netting **525a, 525b. The** panel **530** is movable between a closed position in overlying, face-to-face relation with the base surface **522 (Fig. 7A)** and an open position disposed substantially transverse to the base surface **522 (Fig. 7B).** The base **522,** elastic cargo netting **525a, 525b,** and panel **530** define one or more storage compartments, for receiving items therein.

Various types of elastic material may be utilized.

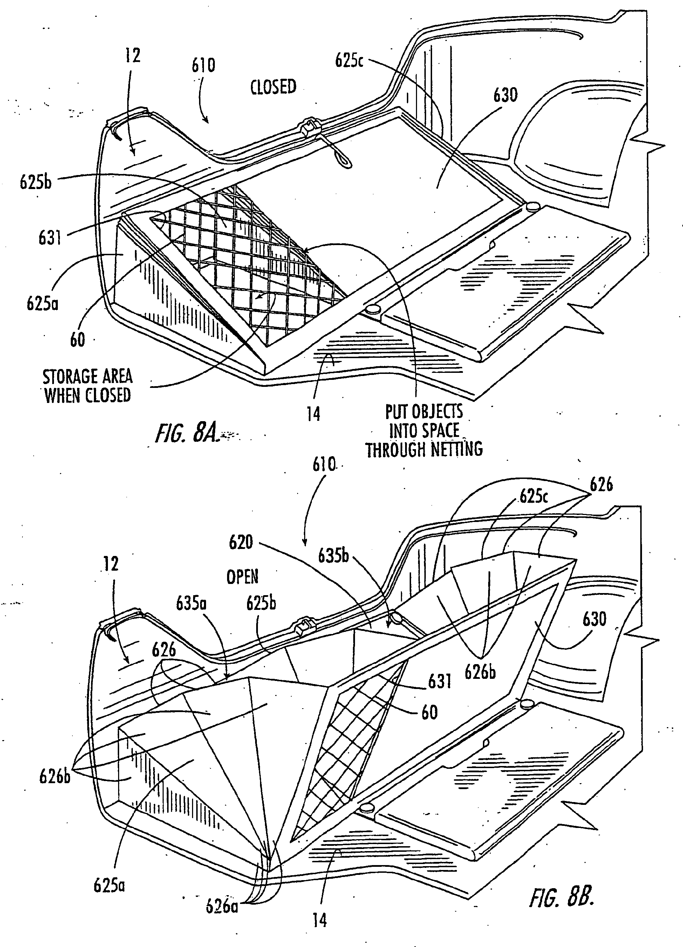

Referring now to **Figs. 8A-8B,** a collapsible storage apparatus **610** for storing items within a vehicle compartment **12,** is illustrated. The apparatus **610** includes two compartments **635a, 635b** in which items can be stored. The first compartment **635a** is defined by the vehicle floor **14,** a pair of expandable walls **625a, 625b,** and panel **630.** The portion of panel **630** overlying compartment **635a** includes an aperture **631** formed therethrough with cargo netting **60** overlying the aperture **631.** The second compartment **635b** is defined by base **620,** a pair of expandable walls **625b, 625c,** and panel **630.**

The illustrated expandable walls **625a, 625b, 625c each** include a plurality of members **626** pinned together-at a first end **626a** and having opposite free ends **626b.** The members **626** of each expandable wall **625a, 425b** are configured to move from a stacked relationship **(Fig. 8A)** to a fanned relationship **(Fig. 8B)** when the panel **630 is** moved from a closed position, **(Fig. 8A)** to an open position **(Fig. 8B)** as described above.

Expandable and collapsible walls of various types and configurations may be utilized (*e.g*., telescoping walls; walls having accordion-type bellows; etc.).

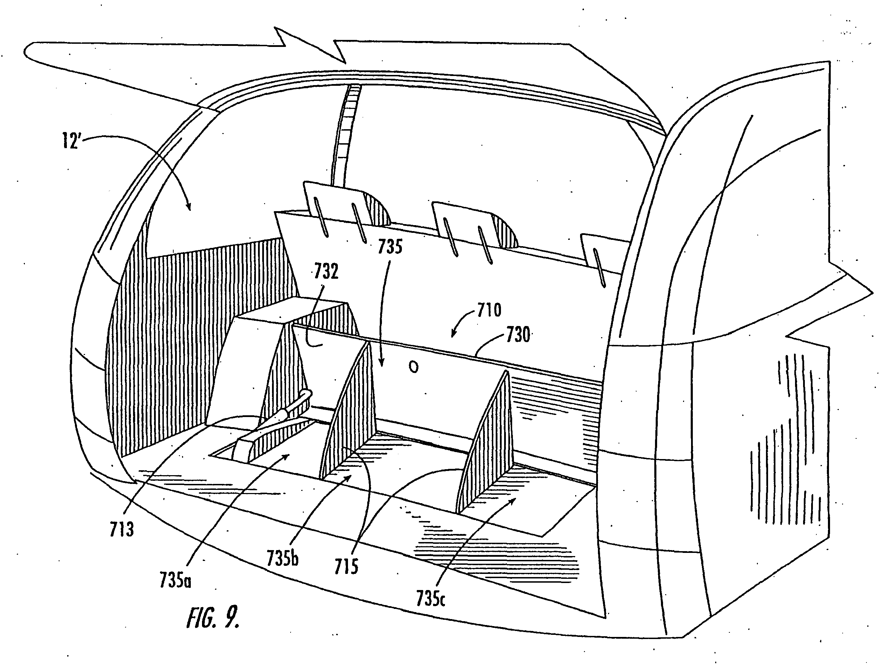

Referring to **Fig. 9,** an apparatus **710** for storing items within a vehicle compartment **12'** is illustrated. The apparatus **710,** illustrated in **Fig. 9** in an open position, includes a rear panel **730** that is pivotally attached within the vehicle compartment **12'** (*e.g.,* attached to a base or floor covering or floor) and that defines a storage compartment **735** in conjunction with the floor (or base or floor covering). A biasing device **713** is attached to the rear panel **730** and to the vehicle floor (or other portion of the vehicle compartment **12')** and is configured to urge the rear panel **730** to the open position. The illustrated biasing device **713** is a telescoping strut (*e.g.*, gas, hydraulic) of the type utilized in the automotive industry for supporting hatchback doors, hoods, and the like. Telescoping struts are well understood by those skilled in the art and need not be described further herein. The illustrated biasing device **713** may also serve the function of a locking member configured to releasably retain the rear panel **730** in the open position. Alternatively, the biasing device **713** may be configured to urge the rear panel **730** from an open position to a closed position and to help maintain the rear panel **730** in a closed position.

It is to be understood that additional biasing devices may be utilized that serve the same or different functions. For example, one or more biasing- devices may be provided to urge the rear panel **730** to an open position, and one or more biasing devices may be provided to, urge the rear panel **730** to a closed position.

Various types of biasing devices may be utilized. Springs, dampeners, and other known biasing devices may also be utilized, without limitation.

The apparatus **710** of **Fig. 9** also includes flexible material **715** attached to the vehicle floor (or base or floor covering) and to the front side **732** of the rear panel **730** that divides the storage compartment **735** into multiple sections **735a, 735b, 735c** when the rear panel **730** is moved to the open position. An exemplary flexible material **715** may be cargo netting. Various types of materials may be utilized, without limitation.

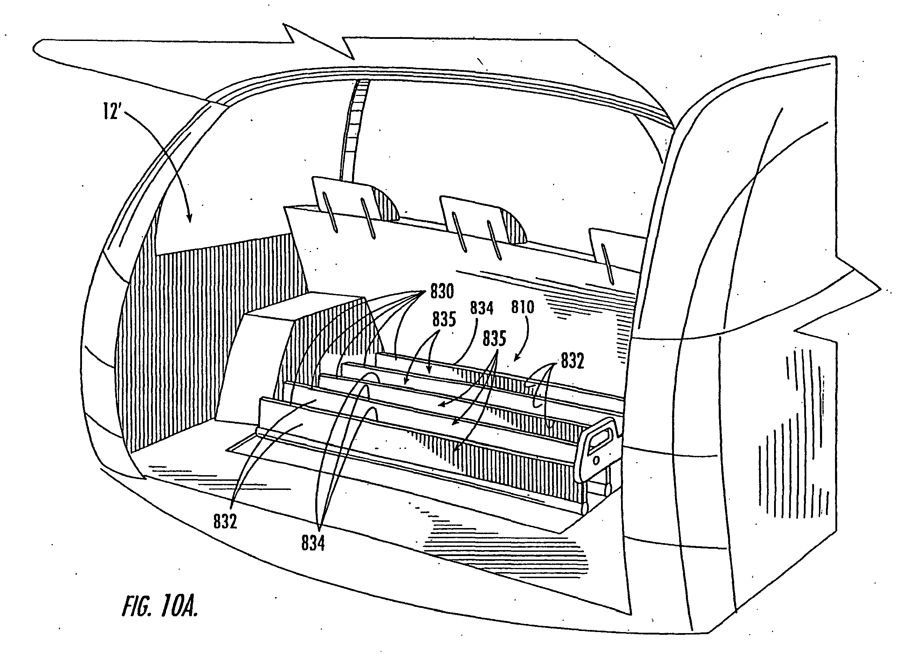

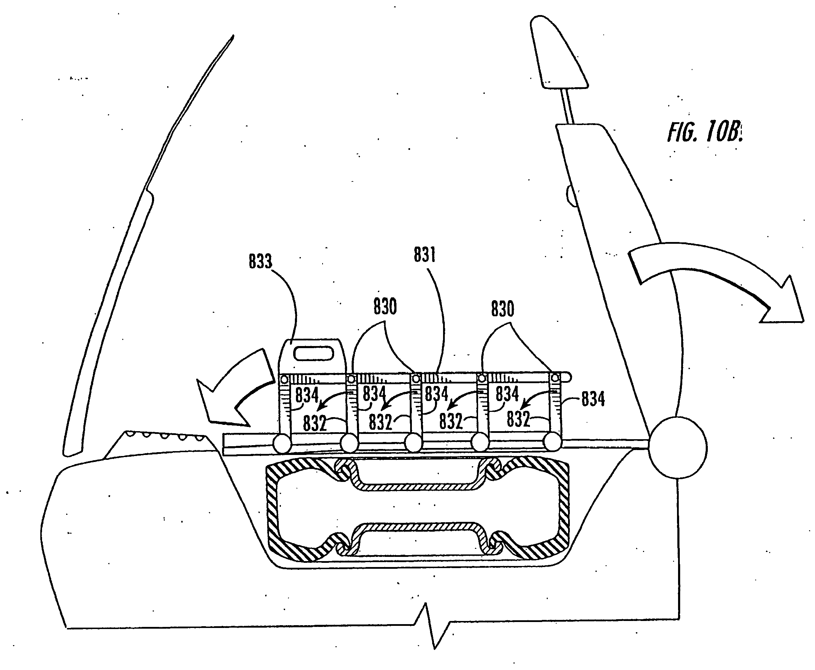

Referring to Figs. 10A-10B, an apparatus 810 for storing items within a vehicle compartment 12' is illustrated in an open position. The apparatus **810,** illustrated in **Figs. 10A-10B** in an open position, includes a plurality of elongate panels **830.** pivotally attached within the vehicle compartment **12'** (*e.g*., attached to a base or floor covering or floor) in adjacent, spaced-apart relationship, and that define a plurality of storage compartments **835** in conjunction with the floor (or base or floor covering). The illustrated panels **830** are in substantially parallel, spaced-apart relationship.

Each panel **830** includes opposite front and rear sides **832, 834.** The panels **830** are collectively movable between closed and open positions. In the closed position, the front side **832** of each panel **830** is in overlying, face-to-face relation with the vehicle floor (or base or floor covering). In the open position, the panels **830** are collectively disposed substantially transverse (*e.g*., normal) to the vehicle floor (or base or floor covering) to define a plurality of storage compartments **835** for receiving items therein.

As illustrated the panels **830** are collectively movable between a closed and open position via a member **831** that is movably mounted to each panel **830.** Member **831** is movably attached to each panel **830** adjacent a respective end portion thereof. However, it is understood that member **831** may be movably attached to each panel **830** in various locations. Moreover, member **831** may have various configurations. A handle 833 is attached to the member **831** and is configured to be grasped by a user to move the member **831** to thereby collectively move the panels **830** between closed and open positions.

At least one biasing device (not shown) may be attached to one or more of the panels **830** that is configured to urge the panels **830 to** the open position. In addition, a floor covering may be disposed on the vehicle compartment floor. The same floor covering may be disposed on the rear side **834** of one or more of the panels **830** such that the apparatus **810** has an integral look with the vehicle compartment **12'** when the panels **830** are collectively in the closed position.

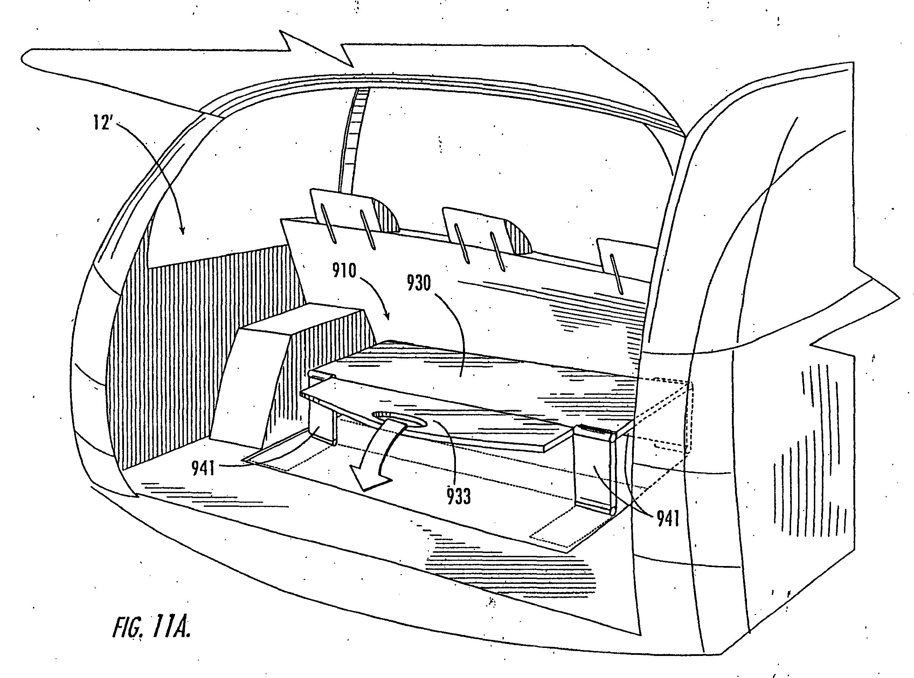

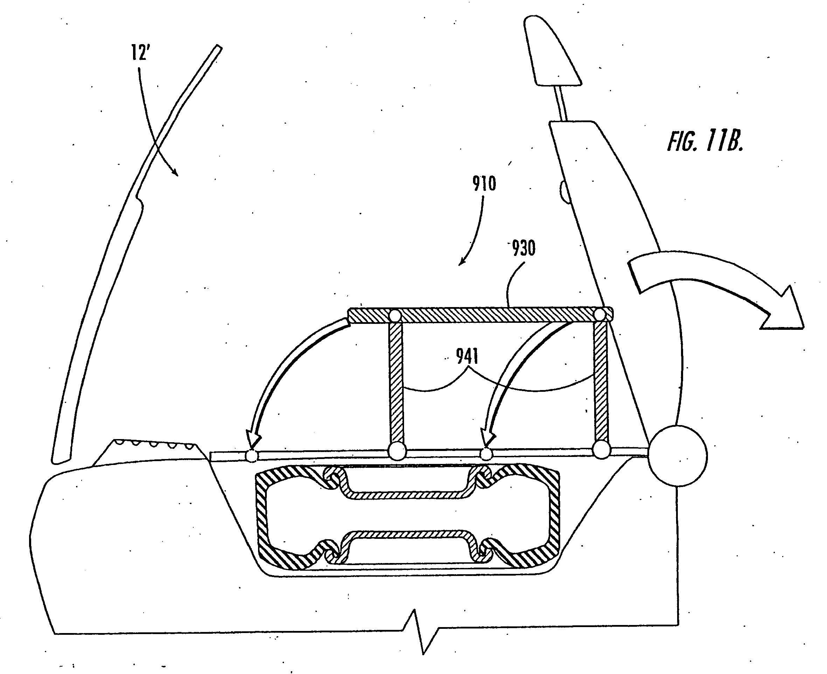

Referring to Figs. 11A-11B, an apparatus 910 for storing items within a vehicle compartment 12' is illustrated. The apparatus **910** includes an elongate panel **930** pivotally attached to the vehicle compartment floor (or floor covering or base) via leg members 941. The panel 930 is movable between a stored position in face-to-face, substantially contacting relation with the floor (or base or floor covering) and an operative position wherein the panel **930** is in spaced-apart, face-to-face relation with the floor (or base or floor covering). In the operative position, the panel **930** can serve the function of a table and/or shelf. A handle **933** is connected to the panel **930** and is configured to be grasped by a user and to move the panel 930 between the stored and operative positions.

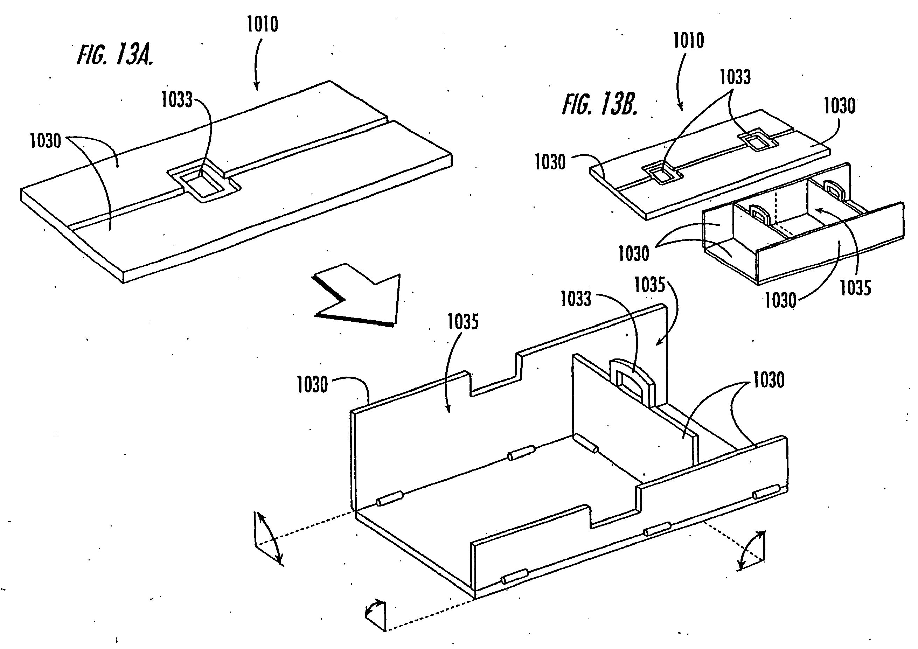

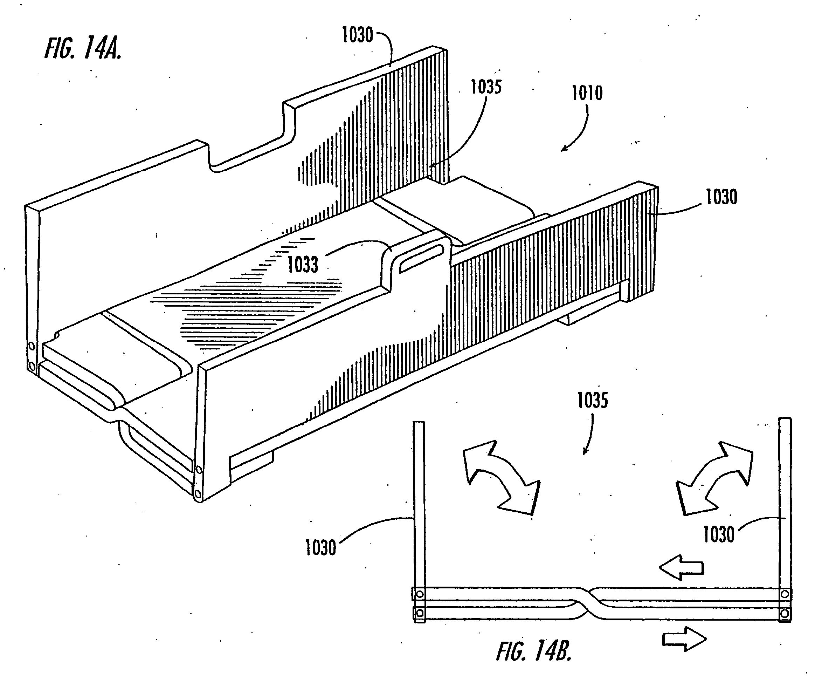

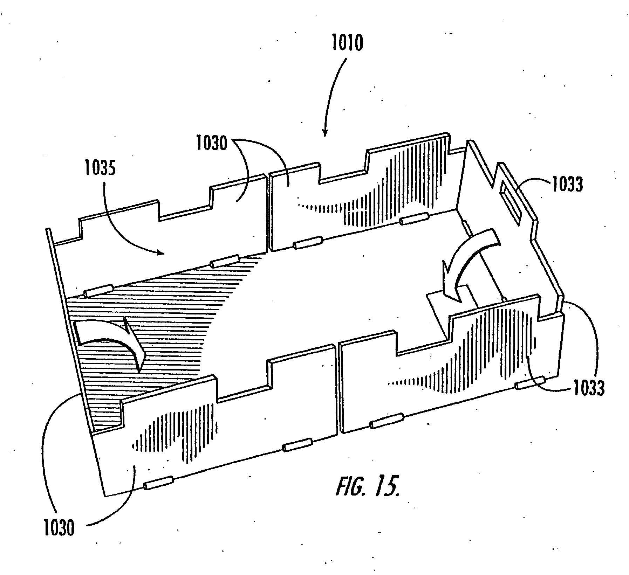

Referring to Figs. 12A and 12B, an embodiment of the present invention is illustrated as a collapsible storage apparatus **1010** for storing items within a vehicle compartment. Figures 13A-13B, 14A-14B and 15 illustrate alternative storage apparatus. In these illustrated embodiments, the respective apparatus **1010** includes a plurality of walls **1030** that are attachable to the floor of a vehicle (or to a base or to a floor covering). The walls **1030** are configured to overlie the floor (or base or floor covering) in a folded, flat configuration, and to unfold into one or more storage compartments 1035 for receiving items therein. In the illustrated embodiment, a handle **1033** is connected to one of the walls **1030** and is configured to be grasped by a user and used to unfold one or more of the various walls **1030** into one or more storage compartments **1035.**

The storage apparatus embodiment described and illustrated in Figures 12A and 12B herein may be portable such that they can be easily placed within a vehicle compartment and removed therefrom. Although an embodiment of the present invention has been described and illustrated with respect to installation within the trunk of an automobile, it is understood that apparatus according to embodiments of the present invention can be installed in various other compartments and areas of various types of vehicle.

The foregoing is illustrative of the present invention and is not to be construed as limiting thereof. Although an exemplary embodiment of this invention has been described those skilled in the art will readily appreciate that many modifications are possible in the exemplary embodiment without materially departing from the novel teachings and advantages of this invention. Accordingly, all such modifications are intended to be included within the scope of this invention as long as they fall within the scope of the claim.

## Claims

1. A portable storage apparatus configured to be removably disposed on the compartment floor of a vehicle, **characterised by**:
a central wall (1030) having opposite first and second sides and having first and second end regions;
first, second and third walls each having a length substantially half of a length of said central wall, movable with respect to the central wall between respective stored and operative positions, wherein respective ends of the first and third walls are pivotally attached to the central wall and extends outwardly substantially perpendicular from said first end region and central region of the central wall first side when the first, second and third walls are in an operative position, the second wall being pivotally attached to remaining ends of the first and third walls at respective ends thereof to define a first storage compartment (1035) for receiving items therein, and wherein the first, second and third walls overlie the central wall first side in a folded, face-to-face configuration when in a stored position;
fourth, fifth and sixth walls each having a length substantially half of a length of said central wall, movable with respect to the central wall between respective stored and operative positions, wherein respective ends of the fourth and sixth walls are pivotally attached to the central wall and extends outwardly substantially perpendicular from said second end region and central region of the central wall second side when the fourth, fifth and sixth walls are in an operative position, the second wall being pivotally attached to remaining ends of the first and third walls at respective ends thereof to define a second storage compartment (1035) for receiving items therein, and wherein the fourth, fifth and sixth walls overlie the central wall second side in a folded, face-to-face configuration when in a stored position;
a central handle extending from an upper edge portion of the central region of the central wall and by which a user can carry the portable storage apparatus;
a first handle portion extending from an upper edge portion of the second wall;
a second handle portion extending from an upper edge portion of the fifth wall, wherein the first handle portion is in adjacent, face-to-face alignment with the central handle when the first, second and third walls are in the stored position, and the second handle portion is in adjacent, face-to-face alignment with the central handle when the fourth, fifth and sixth walls are in the stored position; and
first and second posts extending downwardly at locations where said first and second walls and said fourth and fifth walls are attached respectively.

## Patentansprüche

1. Tragbare Stauvorrichtung, die so konfiguriert ist, dass sie entfembar auf dem Laderaumboden eines Fahrzeugs angebracht werden kann, **gekennzeichnet durch**:
eine mittlere Wand (1030) mit einer ersten und einer zweiten Seite, die einander gegenüber liegen, sowie mit einem ersten und einem zweiten Endbereich;
eine erste, zweite und dritte Wand jeweils mit einer Länge, die im Wesentlichen der Hälfte der Länge der genannten mittleren Wand entspricht, die in Bezug auf die mittlere Wand jeweils zwischen einer Stau- und einer Gebrauchsposition beweglich sind, wobei die jeweiligen Enden der ersten und der dritten Wand schwenkbar an der mittleren Wand angebracht sind und im Wesentlichen lotrecht von dem genannten ersten Endbereich und dem mittleren Bereich der ersten Seite der mittleren Wand nach außen verlaufen, wenn die erste, die zweite und die dritte Wand in einer Gebrauchsposition sind, wobei die zweite Wand schwenkbar an den verbleibenden Enden der ersten und der dritten Wand an den jeweiligen Enden davon angebracht sind, um einen ersten Stauraum (1035) zur Aufnahme von Gegenständen darin zu definieren, und wobei die erste, zweite und dritte Wand in einer Stauposition in einer zusammengeklappten Fläche-an-Fläche-Konfiguration über der ersten Seite der mittleren Wand liegen;
eine vierte, fünfte und sechste Wand jeweils mit einer Länge, die im Wesentlichen der Hälfte der Länge der genannten mittleren Wand entspricht, die in Bezug auf die mittlere Wand jeweils zwischen einer Stau- und einer Gebrauchsposition beweglich sind, wobei die jeweilige Enden der vierten und der sechsten Wand schwenkbar an der mittleren Wand angebracht sind und im Wesentlichen lotrecht von dem genannten zweiten Endbereich und dem mittleren Bereich der zweiten Seite der mittleren Wand nach außen verlaufen, wenn die vierte, fünfte und sechste Wand in einer Gebrauchsposition sind, wobei die zweite Wand schwenkbar an den übrigen Enden der ersten und der dritten Wand an den jeweiligen Enden davon angebracht sind, um einen zweiten Stauraum (1035) zur Aufnahme von Gegenständen darin zu definieren, und wobei die vierte, fünfte und sechste Wand in einer Stauposition in einer zusammengeklappten Fläche-an-Fläche-Konfiguration über der zweiten Seite der mittleren Wand liegen;
einen mittleren Griff, der sich von einem oberen Randabschnitt des mittleren Bereichs der mittleren Wand erstreckt, und mittels dessen ein Benutzer die tragbare Stauvorrichtung tragen kann;
einen ersten Griffabschnitt, der sich von einem oberen Randabschnitt der zweiten Wand erstreckt;
einen zweiten Griffabschnitt, der sich von einem oberen Randabschnitt der fünften Wand erstreckt, wobei sich der erste Griffabschnitt in einer benachbarten Fläche-an-Fläche-Ausrichtung mit dem mittleren Griff befindet, wenn die erste, zweite und dritte Wand in der Stauposition sind und der zweite Griffabschnitt sich in einer benachbarten Fläche-an-Fläche-Ausrichtung mit dem mittleren Griff befindet, wenn die vierte, fünfte und sechste Wand in der Stauposition sind; und
eine erste und eine zweite Stange, die abwärts an Stellen verlaufen, an denen die genannte erste und zweite Wand sowie die genannte vierte und fünfte Wand jeweils angebracht sind.

## Revendications

1. Appareil de stockage portable configuré pour être disposé de façon amovible sur le plancher du compartiment à bagages d'un véhicule, **caractérisé par** :
une paroi centrale (1030) ayant un premier et un deuxième côtés opposés, et ayant une première et une deuxième régions d'extrémité ;
des première, deuxième et troisième parois, chacune ayant une longueur qui est sensiblement égale à la moitié de la longueur de ladite paroi centrale, et pouvant être déplacée par rapport à la paroi centrale entre une position rangée et une position opérationnelle respective, cas dans lequel les extrémités respectives de la première et de la troisième parois sont attachées de façon pivotante à la paroi centrale et s'étend vers l'extérieur dans un plan sensiblement perpendiculaire à partir de ladite première région d'extrémité et de la région centrale du premier côté de la paroi centrale lorsque les première, deuxième et troisième parois se trouvent dans une position opérationnelle, la deuxième paroi étant attachée de façon pivotante aux extrémités restantes de la première et de la troisième parois au niveau des extrémités respectives de celles-ci afin de définir un premier compartiment de stockage (1035) pour permettre d'y recevoir des articles, et dans lequel les première, deuxième et troisième parois sont superposées au premier côté de la paroi centrale suivant une configuration repliée, face à face, quand elles se trouvent dans une position rangée ;
des quatrième, cinquième et sixième parois, chacune ayant une longueur qui est sensiblement égale à la moitié de la longueur de ladite paroi centrale, et pouvant être déplacée par rapport à la paroi centrale entre une position rangée et une position opérationnelle respective, cas dans lequel les extrémités respectives de la quatrième et de la sixième parois sont attachées de façon pivotante à la paroi centrale et s'étend vers l'extérieur dans un plan sensiblement perpendiculaire à partir de ladite deuxième région d'extrémité et de la région centrale du deuxième côté de la paroi centrale lorsque les quatrième, cinquième et sixième parois se trouvent dans une position opérationnelle, la deuxième paroi étant attachée de façon pivotante aux extrémités restantes de la première et de la troisième parois au niveau des extrémités respectives de celles-ci afin de définir un deuxième compartiment de stockage (1035) pour permettre d'y recevoir des articles, et dans lequel les quatrième, cinquième et sixième parois sont superposées au deuxième côté de la paroi centrale suivant une configuration repliée, face à face, quand elles se trouvent dans une position rangée ;
une poignée centrale laquelle s'étend à partir d'une portion de bord supérieur de la région centrale de la paroi centrale et grâce à laquelle un utilisateur peut porter l'appareil de stockage portable ;
une première portion de poignée laquelle s'étend à partir d'une portion de bord supérieur de la deuxième paroi;
une deuxième portion de poignée laquelle s'étend à partir d'une portion de bord supérieur de la cinquième paroi, cas dans lequel la première portion de poignée est en alignement adjacent, face à face, avec la poignée centrale lorsque les première, deuxième et troisième parois se trouvent dans la position rangée, et la deuxième portion de poignée est en alignement adjacent, face à face, avec la poignée centrale lorsque les quatrième, cinquième et sixième parois se trouvent dans la position rangée ; et
des premier et deuxième montants qui s'étendent vers le bas au niveau d'emplacements sur lesquels lesdites première et deuxième parois ainsi que lesdites quatrième et cinquième parois sont respectivement attachées.
